# DEMANDE DE BREVET EUROPEEN

(11) **EP 1 295 802 A1**
(43) Date de publication de la demande: **26.03.2003**
(21) Numéro de dépôt: 02356165.7
(22) Date de dépôt: 29.08.2002
(51) Int. Cl.: B65D 33/04, B65D 65/38

(54) **Sac en matiere plastique notamment pour poubelle**

(30) Priorité: 30.08.2001 FR 0111394
(71) Demandeur: Autobar Flexible France, 43600 Sainte Sigolène (FR)
(72) Inventeur: Pleynet, Daniel, 43120 Moistrol sur Loire (FR); De Waure, Philippe, 69003 Lyon (FR)
(74) Mandataire: Thivillier, Patrick

(57) **Abrégé**

Ce sac est remarquable en ce qu'il est constitué d'au moins un film (1) en matière plastique transparente, et d'au moins un film (2) en matière plastique opaque recyclée, lesdits films (1) et (2) étant assemblés entre eux pour constituer la structure du sac de manière à ce qu'elle comprenne au moins une partie transparente et au moins une partie en matière opaque recyclée.

## Description

L'invention se rattache au secteur technique de la transformation des matières plastiques pour la réalisation de sacs de contenances diverses, notamment pour poubelles à usage privé ou public.

Il est connu de réaliser des sacs en matière plastique recyclée. De par la nature des films plastiques utilisés, l'ensemble du sac est opaque en étant généralement de couleur foncée (gris, noir, bleu....), de sorte qu'il n'est pas possible de voir les produits disposés en vrac à l'intérieur du sac. Or, pour des raisons de sécurité, notamment dans les lieux publics et selon les nouvelles normes de tri sélectif, il est nécessaire de pouvoir visualiser le contenu de ces sacs, afin de repérer tout objet suspect ou mal trié. Le plus souvent, ces sacs poubelles sont accrochés au niveau de leur ouverture à une ossature support solidaire d'un piètement.

A l'inverse de la solution précédemment décrite, on connaît des sacs réalisés totalement en matière plastique transparente ou translucide, telle que généralement du polyéthylène vierge ou régénéré. La matière utilisée n'étant pas recyclée, le coût de production est supérieur.

Généralement, quel que soit le type de sacs utilisés (totalement opaques ou totalement translucides), ces derniers sont réalisés à partir d'une gaine extrudée monomatière que l'on fend une fois dans le sens de la longueur. Cette technique nécessite de respecter un ratio dimensionnel entre la sortie de la filière et la largeur de la gaine en tant que telle, ce qui conditionne les cadences de production, et caractérise les résistances mécaniques en limitant les cadences de production.
Il est donc apparu avantageux, à la sortie de la filière de l'extrudeuse, de réaliser directement un film multi-laizes sur des largeurs d'extrusion de 3,50 m, ce qui permet d'augmenter les cadences de production en utilisant au maximum les capacités de l'extrudeuse.

Enfin, si l'on considère l'importance grandissante de la collecte sélective des déchets et de la future entrée en vigueur d'une norme sur le tri sélectif, l'opacité de la matière des sacs poubelle devra être inférieure à 50%.

A partir de cet état de la technique, le problème que se propose de résoudre l'invention est de réaliser un sac poubelle respectant les contraintes du tri sélectif et de la sécurité, et qui soit d'un coût de revient réduit par rapport aux sacs connus totalement transparents ou translucides.

Pour résoudre un tel problème, il a été conçu et mis au point, un sac qui est constitué d'au moins un film en matière plastique transparente et d'au moins un film en matière plastique opaque recyclée, lesdits films étant assemblés entre eux pour constituer la structure du sac de manière à ce qu'elle comprenne au moins une partie transparente, et au moins une partie opaque recyclée.

Pour résoudre le problème posé de pouvoir visualiser le contenu du sac en vue du tri sélectif et de la sécurité, le film transparent ou translucide est, soit un film polyéthylène vierge, mono ou coextrudé, soit un film polyéthylène régénéré, mono ou coextrudé.

Pour résoudre le problème posé de diminuer le coût, le film opaque en matière recyclée est du polyéthylène recyclé mono ou coextrudé.

Avantageusement, la partie recyclée représente au moins 50 % de la structure.

Pour résoudre le problème posé de réaliser la structure en tant que telle du sac, les films transparent et recyclé opaque sont assemblés par soudure.

Selon une autre caractéristique, la partie ouverte de la structure, à l'opposé d'une partie faisant office de fond, présente des agencements de fermeture temporaire.

L'invention est exposée ci-après plus en détail à l'aide des figures des dessins annexés dans lesquels :

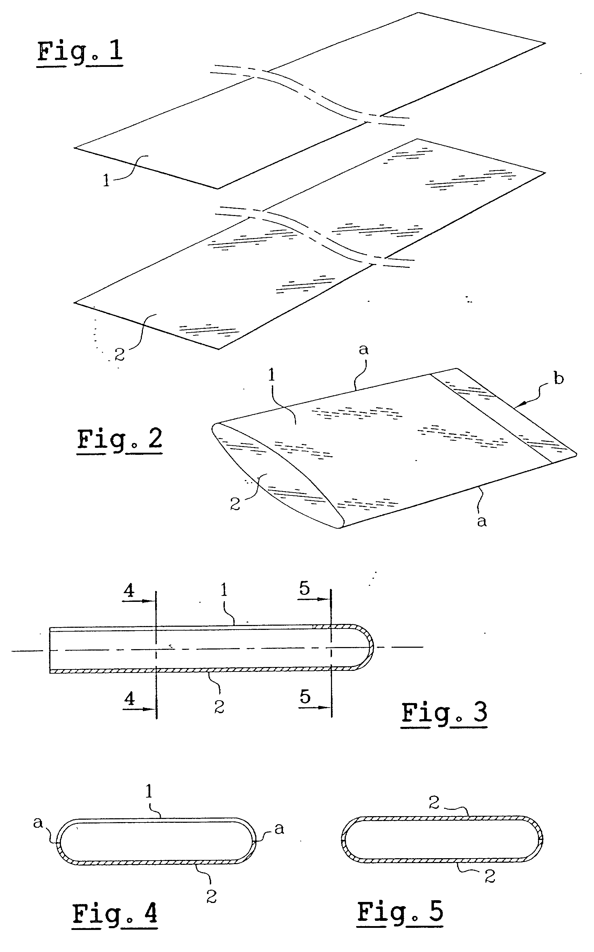

- la figure 1 est une vue en perspective avant assemblage du film transparent et du film opaque recyclé pour la réalisation d'un sac selon l'invention ;
- la figure 2 est une vue en perspective à caractère schématique d'un sac selon les caractéristiques de l'invention ;
- la figure 3 est une vue en coupe longitudinale, à caractère schématique, du sac selon l'invention ;
- la figure 4 est une vue en coupe transversale selon la ligne 4-4 de la figure 3 ;
- la figure 5 est une vue en coupe transversale selon la ligne 5-5 de la figure 3 ;
- les figures 6, 7 sont des vues en plan, à caractère schématique, montrant à titre d'exemple indicatif nullement limitatif, différentes formes de réalisation du sac avec une partie recyclée plus ou moins importante ;
- la figure 8 est une vue en perspective montrant à titre indicatif un exemple d'utilisation du sac selon l'invention.

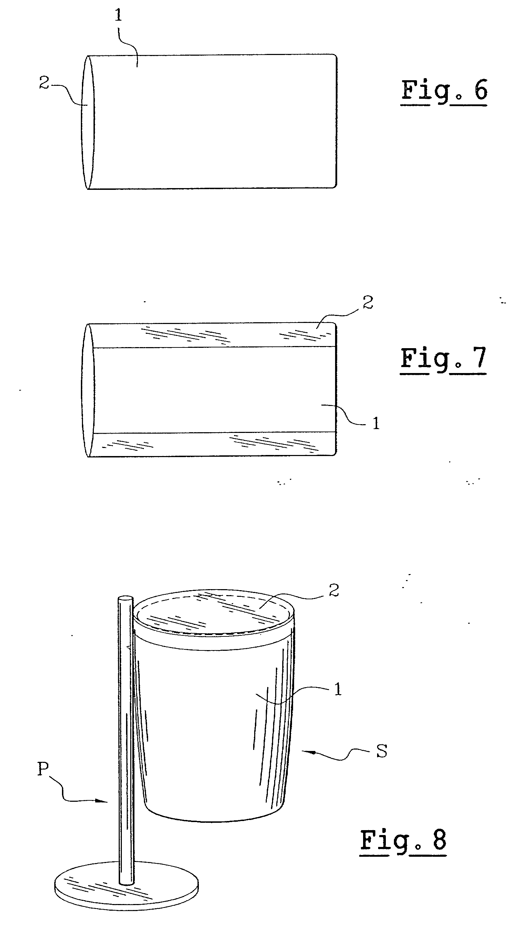

Comme indiqué, l'invention trouve une application particulièrement avantageuse, pour la réalisation de sacs, notamment de sacs poubelles en matière plastique de différentes contenances, telles que généralement admises par les normes en vigueur.
Parmi les utilisations spécialement visées, on peut citer les sacs poubelles utilisés dans les lieux publics et destinés à être suspendus à une potence support (P) comme illustrée figure 8. On peut également citer l'utilisation de ces sacs pour le tri sélectif à usage ménager.

Selon une caractéristique à la base de l'invention, le sac (S) est constitué d'au moins de deux films (1) et (2). Le film (1) est en matière plastique transparente ou translucide, tandis que le film (2) est en matière plastique opaque recyclée.
Par exemple, le film transparent (1) est un film polyéthylène vierge ou régénéré, du type mono ou coextrudé. Le film (2) est un film polyéthylène recyclé du type mono ou coextrudé. De même, le film recyclé (2) peut être monocolore ou bicolore. Dans le cas d'un film opaque recyclé coextrudé, ce dernier peut être bicolore en présentant une face externe d'une couleur (grise par exemple) et l'autre face interne d'une autre couleur (bleu par exemple).

Les films (1) et (2) sont assemblés entre eux par tous moyens connus et appropriés pour un homme du métier pour constituer la structure du sac (S) de manière à ce qu'elle comprenne au moins une partie transparente et au moins une partie opaque recyclée. La réalisation de ce sac (S) en tant que tel, à partir des films (1) et (2), n'est pas décrite car parfaitement connue pour un homme du métier.
Par exemple, les deux films (1) et (2) peuvent être superposés et assemblés par soudure (a) au niveau de leur bord longitudinaux et par une soudure transversale (b) pour réaliser la partie faisant office de fond. Bien évidemment, cet assemblage s'effectue en continu de manière automatique. On note également que la partie de fond du sac, afin de lui permettre un certain développement en fonction de la capacité requise, est conformée par tous moyens connus et appropriés, pour faire par exemple office de soufflet.
Cela peut également être le cas pour les bords latéraux du sac.
De même, la partie ouverte de la structure du sac, à l'opposé de la partie faisant office de fond, présente tout type d'agencement de fermeture temporaire.

Sur la base de cette conception du sac à partir d'un film (1) en matière plastique transparente et d'un film (2) en matière plastique opaque recyclée, on peut envisager différentes réalisations telles qu'illustrées à titre indicatif nullement limitatif aux figures des dessins.

De manière avantageuse et en considérant la norme sur le tri sélectif, il est apparu important que la partie recyclée du sac c'est à dire celle résultant de la présence du film (2), représente au moins 50 % de la totalité de la structure.

Dans cette hypothèse, la figure 6 représente un sac dont l'une des faces est totalement réalisée par le film (1) en matière plastique transparente tandis que l'autre est totalement réalisée par le film (2) en matière recyclée.
A la figure 7, le film en matière transparente (1) est de largeur inférieure à celle du film en matière plastique recyclée (2) de sorte qu'après assemblage des deux films, une bande supplémentaire de matière plastique recyclée apparaît sur la face translucide. Cette variante correspond à un sac à soudure de fond et avec ou sans soufflets.

Bien évidemment, le film (1) et/ou le film (2) peuvent présenter avant assemblage ou après assemblage pour la réalisation des sacs, tous types d'impression obtenues par tous moyens connus et appropriés pour un homme de métier.

Les avantages ressortent bien de la description, en particulier on souligne et on rappelle :
- les sacs obtenus sont à double face (translucide et opaque) ;
- les sacs permettent le tri sélectif tout en comportant au minimum 50 % de matière recyclée ;
- la possibilité de confidentialité du contenu : impression des consignes dans la couleur de la gamme sur la face transparente ou opaque, en observant que la lisibilité est meilleure sur la face opaque ;
- la possibilité de faire varier, en fonction de l'épaisseur, la résistance mécanique du film en matière plastique transparente ou translucide pour s'adapter au marché ;
- la mixité des matériaux (polyéthylènes vierges, régénérés et recyclés) ;
- diminution des coûts en utilisant des matières recyclées ;
- optimisation des coûts de production en utilisant les capacités maximum de l'extrusion : film multi laizes.

## Revendications

1. Sac en matière plastique notamment pour poubelle, **caractérisé en ce qu'**il est constitué d'au moins un film (1) en matière plastique transparente, et d'au moins un film (2) en matière plastique opaque recyclée, lesdits films (1) et (2) étant assemblés entre eux pour constituer la structure du sac de manière à ce qu'elle comprenne au moins une partie transparente et au moins une partie en matière opaque recyclée.

2. Sac en matière plastique selon la revendication 1, **caractérisé en ce que** le film transparent (1) est un film polyéthylène vierge, mono ou coextrudé.

3. Sac en matière plastique selon la revendication 1, **caractérisé en ce que** le film transparent (1) est un film polyéthylène régénéré, mono ou coextrudé.

4. Sac en matière plastique selon la revendication 1, **caractérisé en ce que** le film (2) est un film polyéthylène recyclé, mono ou coextrudé.

5. Sac en matière plastique selon la revendication 1, **caractérisé en ce que** le film (2) est monocolore.

6. Sac en matière plastique selon la revendication 1, **caractérisé en ce que** le film (2) coextrudé est bicolore, en présentant une face externe d'une couleur et une face interne d'une autre couleur.

7. Sac en matière plastique selon la revendication 1, **caractérisé en ce que** la partie recyclée représente au moins 50 % de la structure.

8. Sac en matière plastique selon la revendication 1, **caractérisé en ce que** les films transparent (1) et recyclé (2) sont assemblés par soudure.

9. Sac en matière plastique selon la revendication 1, **caractérisé en ce que** la partie ouverte de la structure à l'opposé d'une partie faisant office de fond, présente des agencements de fermeture temporaire.
